# EUROPÄISCHE PATENTSCHRIFT

(11) **EP 1 893 687 B1**
(45) Veröffentlichungstag und Bekanntmachung des Hinweises auf die Patenterteilung: **17.12.2008**
(21) Anmeldenummer: 06777312.7
(22) Anmeldetag: 13.06.2006
(51) Int. Cl.: C08L 25/00, C08L 25/04

(54) **VERSTÄRKTE THERMOPLASTISCHE FORMMASSEN**
REINFORCED THERMOPLASTIC MOLDING COMPOUNDS
MATIERES A MOULER THERMOPLASTIQUES RENFORCEES

(30) Priorität: 14.06.2005 DE 102005027485
(43) Veröffentlichungstag der Anmeldung: 05.03.2008
(73) Patentinhaber: BASF SE, 67056 Ludwigshafen (DE)
(72) Erfinder: WEBER, Martin, 67487 Maikammer (DE); MÜHLBACH, Klaus, 67269 Grünstadt (DE); ITTEMANN, Peter, 68623 Lampertheim (DE); GRUTKE, Stefan, 67434 Neustadt (DE); INCHAURRONDO, Nicolas, 68165 Mannheim (DE)
(74) Vertreter: Altmann, Andreas
(86) Internationale Anmeldenummer: PCT/EP2006/063125
(87) Internationale Veröffentlichungsnummer: WO 2006/134096

(56) Entgegenhaltungen:
- EP-A- 0 303 919
- DE-A1- 1 949 487
- DE-A1- 3 515 867
- DE-A1- 4 114 248

## Beschreibung

Die vorliegende Erfindung betrifft Formmassen enthaltend eine Zusammensetzung I, bestehend aus einem Copolymer enthaltend α-Methylstyrol und Acrylnitril sowie gegebenenfalls weitere Monomere als Komponente A, ein Polymer B, bestehend aus einem vinylaromatischen Monomer, Acrylnitril und Maleinsäureanhydrid als Komponente B, sowie Glasfasern als Komponente C, Verfahren zur Herstellung derartiger Formmassen, sowie die Verwendung derartiger Formmassen zur Herstellung eines Formkörpers.

Aus dem Stand der Technik sind verstärkte thermoplastische Formmassen auf Basis von Styrolcopolymeren grundsätzlich bekannt.

Bei amorphen Werkstoffen bietet sich die Verwendung von Füll- und Verstärkungsstoffen zur Eigenschaftsmodifizierung an. Bisher sind jedoch nur wenige Beispiele bekannt, bei denen der Zusatz von Füllstoffen zu Styrolcopolymeren versucht wurde.

DE 41 14 248 A1 offenbart thermoplastische Formmassen aus 40 bis 95 Gew.-% eines Copolymeren A aus 90 bis 50 Gew.-% Styrol, α-Methylstyrol, einem kernsubstituierten Styrolderivat oder Mischungen dieser Monomeren und 10 bis 50 Gew.-% Acrylnitril, bis zu 50 Gew.-% eines Pfropfmischpolymerisats als Komponente B, 1 bis 50 Gew.-% eines Verstärkungsmittels auf der Grundlage eines anorganischen Glases als Komponente C sowie 0,1 bis 50 Gew.-% eines Terpolymeren D auf Basis Styrol-Methylmethacryl-Maleinsäureanhydrid und gegebenenfalls weiterer Comonomere mit jeweils 1 bis 15 Gew.-% Styrol und Maleinsäureanhydrid und einem Styrol-Maleinsäureanhydrid-Verhältnis von 5 : 1 bis 1 : 5.

EP 0 303 919 A2 offenbart ebenfalls verstärkte thermoplastische Formmassen, bestehend aus drei Komponenten A, B und C. Die Formmasse enthält dabei als Komponente A 40 bis 94 Gew.-% eines Copolymeren, bestehend aus 90 bis 50 Gew.-% Styrol, α-Methylstyrol, einem kernalkylsubstituierten Styrolderivat oder Mischungen dieser Monomeren und 10 bis 50 Gew.-% (Meth)acrylnitril und/oder Methyl(meth)acrylat. Als Komponente B enthält die Formmasse 20 bis 0,5 Gew.-% eines Terpolymerisates, aufgebaut aus 90 bis 50 Gew.-% mindestens eines Monomeren aus der Gruppe von Styrol, α-Methylstyrol, den kernalkylsubstituierten Styrolen oder Mischungen dieser Monomeren, 5 bis 40 Gew.-% (Meth)acrylnitril und/oder Methyl(meth)acrylat und 2 bis 30 Gew.-% eines weiteren Monomeren, wobei das Terpolymerisat B zwingend als weiteres Monomer tert.-Butyl(meth)acrylat enthält.

Die Formmassen enthalten weiter 5 bis 50 Gew.-% eines Verstärkungsmittels als Komponente C.

DE 1 949 487 offenbart thermoplastische Formmassen auf Basis von Copolymerisaten aus Maleinsäureanhydrid, Styrol und Acrylnitril und Copolymerisaten aus Styrol oder α-Methylstyrol und Acrylnitril oder Methacrylnitril. Die Formmassen gemäß der DT 1 949 487 haben zwar eine hohe Wärmeformbeständigkeit, sind jedoch für viele Anwendungen zu spröde.

DE 35 15 867 A1 offenbart verstärkte thermoplastische Formmassen, bestehend aus Komponente A 5 bis 95 Gew.-% mindestens eines Copolymeren, aufgebaut aus 90 bis 50 Gew.-%, Styrol, α-Methylstyrol, einem kernalkylsubstituierten Styrolderivat oder Mischungen dieser Monomeren, und 10 bis 50 Gew.-% (Meth)-acryinitril, sowie Komponente B 95 bis 5 Gew.-% mindestens eines Styrol als Monomerenbaustein enthaltenden Terpolymerisates, und als Komponente C 5 bis 50 Gew.-% eines Verstärkungsmittels. Gemäß DE 35 15 867 A1 weist die Formmasse als Terpolymerisat B ein solches auf, das aus 90 bis 59 Gew.-% eines Monomeren aus der Gruppe von Styrol, α-Methylstyrol, den kernalkylierten Styrolen oder Mischungen dieser Monomeren, 8 bis 48 Gew.-% (Meth)acrylnitril und 2 bis 30 Gew.-% eines Monomeren aus der Gruppe der Acrylsäure, der Methacrylsäure, des Maleinsäureanhydrids oder Mischungen dieser Monomeren besteht. Die Formmasse enthält als Verstärkungsmittel C an sich bekannte Glasfasern.

Die gemäß den Beispielen der DE 35 15 867 A1 eingesetzten Terpolymere B haben alle einen Anteil an Maleinsäureanhydrid von 5 Gew.-% oder höher.

Insbesondere die Formmassen gemäß DE 35 15 867 A1 weisen für die meisten Anwendungen eine zu niedrige Wärmeformbeständigkeit auf.

Eine Aufgabe der vorliegenden Erfindung lag demgemäß darin, verstärkte Formmassen auf Basis von Styrolcopolymeren mit hoher Wärmeformbeständigkeit und guter Fließfähigkeit bereit zu stellen.

Eine weitere Aufgabe der vorliegenden Erfindung lag darin, verstärkte Formmassen auf Basis von Styrolcopolymeren mit hoher Wärmeformbeständigkeit, guter Fließfähigkeit und gleichzeitig guter Schlagzähigkeit bereit zu stellen.

Erfindungsgemäß wird diese Aufgabe gelöst durch eine Formmasse enthaltend 10 bis 100 Gew.-% einer Zusammensetzung I, bestehend aus
A) 40 bis 95 Gew.-%, bezogen auf das Gewicht der Zusammensetzung I, eines Copolymers enthaltend
   55 bis 90 Gew.-%, bezogen auf das Gewicht der Komponente A, α-Methylstyrol,
   10 bis 50 Gew.-%, bezogen auf das Gewicht der Komponente A, Acrylnitril, sowie
   0 bis 5 Gew.-%, bezogen auf das Gewicht der Komponente A, weitere Monomere
   als Komponente A;
B) 2,5 bis 75 Gew.-%, bezogen auf das Gewicht der Zusammensetzung I, eines Polymers B, bestehend aus
   60 bis 90 Gew.-%, bezogen auf das Gewicht der Komponente B, eines vinylaromatischen Monomers,
   8,01 bis 39,8 Gew.-%, bezogen auf das Gewicht der Komponente B, Acrylnitril,
   0,2 bis 1,99 Gew.%, bezogen auf das Gewicht der Komponente B, Maleinsäureanhydrid
   als Komponente B; und
C) 2,5 bis 60 Gew.%, bezogen auf das Gewicht der Zusammensetzung I, Glasfasern als Komponente C,
wobei die Summe der Komponenten A, B und C 100 Gew.-% ergibt.

Das in den erfindungsgemäßen Formmassen enthaltene Terpolymer B enthält 0,2 bis 1,99 Gew.-% Maleinsäureanhydrid.

Es wurde überraschend gefunden, dass die erfindungsgemäßen Formmassen eine günstige Kombination aus hoher Wärmeformbeständigkeit, Schlagzähigkeit und Fließfähigkeit aufweisen. So zeichnen sich die erfindungsgemäßen Formmassen beispielsweise durch hohe Reißdehnung und hohe Schlagzähigkeit aus.

Neben der Zusammensetzung I können die erfindungsgemäßen Formmassen weitere Komponenten enthalten.

Die erfindungsgemäßen Formmassen zeichnen sich dadurch aus, dass sie von 10 bis 100 Gew.-%, insbesondere von 10 bis 99,999 Gew.-% eine Zusammensetzung I enthalten, die aus den Komponenten A, B und C besteht.

Vorzugsweise enthalten die erfindungsgemäßen Formmassen von 20 bis 80 Gew.-% der Zusammensetzung I, insbesondere von 30 bis 70 Gew.%, beispielsweise von 35 bis 65 Gew.-%, besonders bevorzugt von 40 bis 60 Gew.-%.

Dabei enthält die Zusammensetzung I als Komponente A von 40 bis 95 Gew.%, bevorzugt von 45 bis 92,5 Gew.-%, insbesondere bevorzugt von 50 bis 90 Gew.%, jeweils bezogen auf das Gewicht der Zusammensetzung I, mindestens eines Copolymers enthaltend 55 bis 90 Gew.-%, bezogen auf das Gewicht der Komponente A, α-Methylstyrol und 10 bis 50 Gew.%, bezogen auf das Gewicht der Komponente A, Acrylnitril sowie 0 bis 5 Gew.%, bezogen auf das Gewicht der Komponente A, weitere Monomere.

Gemäß der Erfindung sind die Copolymere A aufgebaut aus 55 bis 90 Gew.-%, bezogen auf das Gewicht der Komponente A, α-Methylstyrol und 10 bis 50 Gew.%, bezogen auf das Gewicht der Komponente A, Acrylnitril sowie 0 bis 5 Gew.-%, bezogen auf das Gewicht der Komponente A, weitere Monomere.

Beispielsweise besteht das Copolymer A aus 60 bis 80 Gew.%, insbesondere 65 bis 75 Gew.-% α-Methylstyrol und 20 bis 40 Gew.%, insbesondere 25 bis 35 Gew.-% Acrylnitril sowie 0 bis 4,5 Gew.%, vorzugsweise 0,01 bis 4 Gew.-%, bevorzugt 0,1 bis 3,5 Gew.%, insbesondere 0,2 bis 3 Gew.-% weitere Monomere, jeweils bezogen auf das Gewicht der Komponente A, wobei die Summe der Monomere 100 Gew.-% ergibt.

Als weitere Monomere sind erfindungsgemäß beispielsweise vinylaromatische Verbindungen wie Styrol oder alkylsubstituierte Styrolderivate geeignet oder Alkylalkylacrylate, beispielsweise solche mit C1- bis C8-Alkylresten, sowie C1- bis C8-Alkylacrylnitril, bevorzugt C1- bis C4-Alkylnitril, oder Mischungen dieser Verbindungen.

Besonders bevorzugt enthält die Zusammensetzung I im Rahmen der vorliegenden Erfindung ein Copolymer A, das aus 70 Gew.-% α-Methylstyrol und 30 Gew.-% Acrylnitril, jeweils bezogen auf das Gewicht der Komponente A, besteht.

Die Copolymere A sind an sich bekannt oder lassen sich nach an sich bekannten Methoden herstellen. Sie lassen sich z. B. durch radikalische Polymerisation, insbesondere durch Emulsions-, Suspensions-, Lösungs- oder Massepolymerisaten herstellen. Solche Copolymere entstehen auch häufig als Nebenprodukte bei der Pfropfcopolymerisation zur Herstellung der Komponente D, besonders dann, wenn große Mengen Monomere auf kleine Mengen Kautschuk gepfropft werden.

Die Copolymere A weisen bevorzugt Viskositätszahlen im Bereich von 40 bis 160 auf. Dies entspricht mittleren Molekulargewichten Mw (Gewichtsmittelwert) im Bereich von 40 000 bis 500 000 g/mol.

Die in den erfindungsgemäßen Formmassen enthaltene Zusammensetzung I enthält weiter eine Komponente B. Als Komponente B enthält die Zusammensetzung I 2,5 bis 75 Gew.%, bezogen auf das Gewicht der Zusammensetzung I, eines Polymers B, bestehend aus
60 bis 90 Gew.-%, bezogen auf das Gewicht der Komponente B, eines vinylaromatischen Monomers,
8,01 bis 39,8 Gew.-%, bezogen auf das Gewicht der Komponente B, Acrylnitril,
0,2 bis 1,99 Gew.-%, bezogen auf das Gewicht der Komponente B, Maleinsäureanhydrid

Die Summe der Komponenten des Polymers B ergibt dabei erfindungsgemäß 100 Gew.-%. Dabei besteht das Polymer B vorzugsweise aus 65 bis 85 Gew.-% eines vinylaromatischen Monomers, insbesondere 70 bis 80 Gew.-%, jeweils bezogen auf das Gewicht der Komponente B. Der Anteil an Acrylnitril im Polymer B beträgt vorzugsweise 15 bis 35 Gew.-%, insbesondere 20 bis 30 Gew.-%, jeweils bezogen auf das Gewicht der Komponente B.

Als vinylaromatische Monomere geeignet sind Verbindungen der allgemeinen Struktur

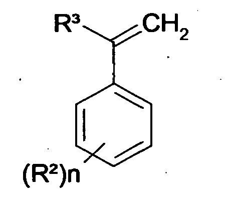

Darin kann R³ Wasserstoff oder ein C1- bis C8-Alkylrest, bevorzugt C1- bis C3-Alkyl, insbesondere Methyl darstellen. Unabhängig von R³ bedeutet R² einen C1- bis C8-Alkylrest, worunter C1- bis C3-Alkyl bevorzugt ist. Besonders bevorzugt ist R² Methyl.

Die Variable n bedeutet eine ganze Zahl von 0 bis 3. Bevorzugt ist n entweder 0 oder 1.

Als vinylaromatische Monomere sind beispielsweise Styrol oder alkylsubstituierte Styrolderivate wie α-Methylstyrol geeignet, wobei Styrol besonders bevorzugt ist.

Das Polymer B besteht zu 0,2 bis 1,99 Gew.-%, bezogen auf das Gewicht der Komponente B, aus Maleinsäureanhydrid. Vorzugsweise beträgt der Anteil an Maleinsäureanhydrid 0,2 bis 1,9 Gew.-%, insbesondere 0,3 bis 1,8 Gew.-%, beispielsweise 0,5 bis 1,5 Gew.%, besonders bevorzugt 0,9 bis 1,1 Gew.%, jeweils bezogen auf das Gewicht der Komponente B.

In diesem Bereich werden besonders gute mechanische Eigenschaften bezüglich Zugfestigkeit erzielt.

Demgemäß betrifft die vorliegende Erfindung auch wie vorstehend beschriebene Formmasse, wobei das Polymer B 0,2 bis 1,9 Gew.-%, bezogen auf das Gewicht der Komponente B, Maleinsäureanhydrid enthält.

Gemäß einer weiteren Ausführungsform betrifft die vorliegende Erfindung Formmassen wie oben beschrieben, wobei das Polymer B aus 70 bis 80 Gew.-% Styrol, 20 bis 30 Gew.-% Acrylnitril und 0,5 bis 1,5 Gew.-% Maleinsäureanhydrid, jeweils bezogen auf das Gewicht der Komponente B, besteht, wobei die Summe der Monomere 100 Gew.-% ergibt.

Das Polymer B kann in an sich bekannter Weise hergestellt werden. Eine geeignete Methode ist das Lösen der Monomerkomponenten des Polymers, z. B. des Styrols, Maleinsäureanhydrids oder Acrylnitrils in einem geeigneten Lösemittel, beispielsweise Methylethylketon (MEK). Zu dieser Lösung werden ein oder gegebenenfalls mehrere chemische Initiatoren hinzugesetzt. Geeignete Initiatoren sind dem Fachmann grundsätzlich bekannt. Geeignet sind beispielsweise Peroxide. Anschließend wird das Gemisch für mehrere Stunden bei erhöhter Temperatur polymerisiert.

Anschließend werden das Lösemittel und die nicht umgesetzten Monomere in an sich bekannter Weise entfernt.

Das Verhältnis zwischen dem vinylaromatischen Monomer und dem Acrylnitrilmonomer im Polymer B liegt vorzugsweise zwischen 80 : 20 und 50 : 50. Vorzugsweise wird die Menge an vinylaromatischem Monomer so ausgewählt, dass sie der Menge des Vinylmonomeren in einem gegebenenfalls in den erfindungsgemäßen Formmassen enthaltenen Pfropfcopolymer D entspricht.

Neben den Komponenten A und B enthält die in den erfindungsgemäßen Formmassen enthaltene Zusammensetzung I von 2,5 bis 60 Gew.%, bezogen auf das Gewicht der Zusammensetzung I, Glasfasern als Komponente C. Die Zusammensetzung I enthält vorzugsweise 4 bis 55 Gew.-%, insbesondere von 5 bis 50 Gew.-%, beispielsweise 6 bis 45 Gew.-% Glasfasern, jeweils bezogen auf das Gewicht der Zusammensetzung I.

Die Glasfasern können zur besseren Verträglichkeit mit dem Matrixmaterial mit einer Schlichte, bevorzugt einer Polyurethanschlichte und einem Haftvermittler ausgerüstet sein. Im Allgemeinen haben die verwendeten Glasfasern einen Durchmesser im Bereich von 6 bis 20 µm.

Die Einarbeitung der Glasfasern kann sowohl in Form von Kurzglasfasern als auch in Form von Endlossträngen (Rovings) erfolgen. Die mittlere Länge der Glasfasern liegt vorzugsweise im Bereich von 0,5 bis 50 mm, besonders bevorzugt im Bereich von 0,08 bis 25 mm.

Glasfasern können auch in Form von Geweben, Matten oder Glasseidenrovings eingesetzt werden.

Neben der Zusammensetzung I können die erfindungsgemäßen Formmassen gemäß einer weiteren Ausführungsform der vorliegenden Erfindung als weitere Komponente D ein kautschukelastisches Polymerisat oder Elastomer enthalten. Die erfindungsgemäßen Formmassen können von 0,1 bis 50 Gew.%, bezogen auf das Gewicht der in der Formmasse enthaltenen Zusammensetzung I, eines kautschukelastischen Polymerisats oder Elastomers enthalten.

Demgemäß betrifft die vorliegende Erfindung auch Formmasse wie zuvor beschrieben, wobei die Formmasse als Komponente D 0,1 bis 50 Gew.-%, bezogen auf das Gewicht der in der Formmasse enthaltenen Zusammensetzung I, eines kautschukelastischen Polymerisats oder Elastomers enthält.

Bevorzugte erfindungsgemäße Formmassen enthalten die Komponente D in Mengen von 0,1 bis 50, insbesondere von 0,2 bis 45 Gew.%, weiter bevorzugt von 0,3 bis 40 Gew.-% oder 0,4 bis 30 Gew.%, jeweils bezogen auf das Gewicht der in der Formmasse enthaltenen Zusammensetzung I. Besonders bevorzugte Formmassen enthalten von 0,5 bis 25 Gew.%, bezogen auf das Gewicht der in der Formmasse enthaltenen Zusammensetzung I, der Komponente D.

Als Komponente D können auch Mischungen aus zwei oder mehreren unterschiedlichen kautschukelastischen Polymerisaten oder Elastomeren eingesetzt werden.

Geeignet sind erfindungsgemäß grundsätzlich alle dem Fachmann für derartige Anwendungen bekannten kautschukelastischen Polymerisate oder Elastomere. Beispielsweise eignen sich Pfropfkautschuke auf Basis von Butadien, Butadien/Styrol, EPDM oder Acrylaten.

Demgemäß betrifft die vorliegende Erfindung gemäß einer weiteren Ausführungsform Formmassen wie zuvor beschrieben, wobei das kautschukelastische Polymerisat oder Elastomer ein Pfropfkautschuk auf Basis von Butadien, Butadien/Styrol, EPDM oder Acrylaten ist.

Als kautschukelastisches Polymerisat oder Elastomer D sind im Rahmen der vorliegenden Erfindung prinzipiell alle kautschukelastischen Polymerisate mit Tg ≤ 0 °C geeignet, insbesondere solche, die als Kautschuk
- einen Dienkautschuk auf Basis von Dienen, wie z. B. Butadien oder Isopren,
- einen Alkylacrylatkautschuk auf Basis von Alkylestern der Acrylsäure, wie n-Butylacrylat und 2-Ethylhexylacrylat,
- einen EPDM-Kautschuk auf Basis von Ethylen, Propylen und einem Dien,
- einen Siliconkautschuk auf Basis von Polyorganosiloxanen,
oder Mischungen dieser Kautschuke bzw. Kautschukmonomeren enthalten.

Bevorzugt ist das kautschukelastisches Polymerisat oder Elastomer D ein Pfropfpolymerisat aus einer Grundstufe und einer Pfropfstufe.

Bevorzugte Pfropfpolymerisate D enthalten, bezogen auf D,
d1) 30 bis 95, bevorzugt 40 bis 90 und besonders bevorzugt 40 bis 85 Gew.-% einer kautschukelastischen Grundstufe aus, bezogen auf d1)
   d11) 50 bis 100, bevorzugt 60 bis 100 und besonders bevorzugt 70 bis 100 Gew.-% eines (C1-C10-Alkyl)esters der Acrylsäure,
   d12) 0 bis 10, bevorzugt 0 bis 5 und besonders bevorzugt 0 bis 2 Gew.-% eines polyfunktionellen, vernetzenden Monomeren,
   d13) 0 bis 40, bevorzugt 0 bis 30 und besonders bevorzugt 0 bis 20 Gew.-% von einem oder mehreren weiteren monoethylenisch ungesättigten Monomeren,
   oder aus
   d11*) 50 bis 100, bevorzugt 60 bis 100 und besonders bevorzugt 65 bis 100 Gew.-% eines Diens mit konjugierten Doppelbindungen,
   d12*) 0 bis 50, bevorzugt 0 bis 40 und besonders bevorzugt 0 bis 35 Gew.-% von einem oder mehreren monoethylenisch ungesättigten Monomeren,
   oder aus
   d11**) 50 bis 100, bevorzugt 60 bis 100 und besonders bevorzugt 65 bis 100 Gew.-% einer Mischung aus Ethylen, Propylen und einem Dien,
   d12**) 0 bis 50, bevorzugt 0 bis 40 und besonders bevorzugt 0 bis 35 Gew.-% von einem oder mehreren weiteren monoethylenisch ungesättigten Monomeren, und
d2) 5 bis 70, bevorzugt 10 bis 60 und besonders bevorzugt 15 bis 60 Gew.-% einer Pfropfstufe aus, bezogen auf d2),
   d21) 50 bis 100, bevorzugt 60 bis 100 und besonders bevorzugt 65 bis 100 Gew.-% einer Styrolverbindung dar allgemeinen Formel 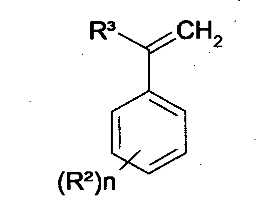 wobei R², R³ unabhängig voneinander H oder C1-C8-Alkyl ist und n 0, 1, 2 oder 3 ist,
   d22) 0 bis 40, bevorzugt 0 bis 38 und besonders bevorzugt 0 bis 35 Gew.-% Acrylnitril oder Methacrylnitril oder deren Mischungen,
   d23) 0 bis 40, bevorzugt 0 bis 30 und besonders bevorzugt 0 bis 20 Gew.-% von einem oder mehreren weiteren monoethylenisch ungesättigten Monomeren.

Die Pfropfhülle kann auch vorwiegend aus Methylmethacrylat aufgebaut sein. Es ist auch möglich, Produkte mit mehreren Pfropfhüllen zu verwenden.

Als (C1-C10-Alkyl)ester der Acrylsäure, Komponente d11), eignen sich vor allem Ethylacrylat, 2-Ethylhexylacrylat und n-Butylacrylat. Bevorzugt sind 2-Ethylhexylacrylat und n-Butylacrylat, ganz besonders bevorzugt ist n-Butylacrylat. Es können auch Mischungen verschiedener Alkylacrylate verwendet werden, die sich in ihrem Alkylrest unterscheiden.

Vernetzende Monomere d12) sind bi- oder polyfunktionelle Comonomere mit mindestens zwei olefinischen Doppelbindungen, beispielsweise Butadien und Isopren, Divinylester von Dicarbonsäuren wie der Bernsteinsäure und Adipinsäure, Diallyl- und Divinylether bifunktioneller Alkohole wie des Ethylenglykols und des Butan-1,4-diols, Diester der Acrylsäure und Methacrylsäure mit den genannten bifunktionellen Alkoholen, 1,4-Divinylbenzol und Triallylcyanurat. Besonders bevorzugt sind der Acrylsäureester des Tricyclodecenylalkohols (siehe DE-OS 12 60 135), der unter dem Namen Oihydrodicyclopentadienylacrylat bekannt ist, sowie die Allylester der Acrylsäure und der Methacrylsäure.

Vernetzende Monomere d12) können in den Formmassen je nach Art der herzustellenden Formmassen, insbesondere je nach den gewünschten Eigenschaften der Formmassen, enthalten sein oder nicht.

Falls vernetzende Monomere d12) in den Formmassen enthalten sind, so betragen die Mengen 0,01 bis 10, bevorzugt 0,3 bis 8 und besonders bevorzugt 1 bis 5 Gew.-%, bezogen auf d1).

Bei den weiteren monoethylenisch ungesättigten Monomeren d13), die auf Kosten der Monomeren d11) und d12) im Pfropfkern d1) enthalten sein können, handelt es sich beispielsweise um:
- vinylaromatische Monomere wie Styrol, Styrolderivate der obigen allgemeinen Formel 1;
- Acrylnitril, Methacrylnitril;
- C1- bis C4-Alkylester der Methacrylsäure wie Methylmethacrylat, weiterhin auch die Glycidylester, Glycidylacrylat und -metacrylat,
- N-substituierte Maleinimide wie N-Methyl-, N-Phenyl- und N-Cyclohexylmaleinimid;
- Acrylsäure, Methacrylsäure, weiterhin Dicarbonsäuren wie Maleinsäure, Fumarsäure und Itaconsäure sowie deren Anhydride wie Maleinsäureanhydrid;
- Stickstoff-funktionelle Monomere wie Dimethylaminoethylacrylat, Diethylaminoethylacrylat, Vinylimidazol, Vinylpyrrolidon, Vinylcaprolactam, Vinylcarbazol, Vinylanilin, Acrylamid und Methacrylamid;
- aromatische und araliphatische Ester der Acrylsäure und Methacrylsäure wie Phenylacrylat, Phenylmethacrylat, Benzylacrylat, Benzylmethacrylat, 2-Phenylethylacrylat, 2-Phenylethylmethacrylat, 2-Phenoxyethylacrylat und 2-Phenoxyethylmethacrylat;
- ungesättigte Ether wie Vinylmethylether;
sowie Mischungen dieser Monomeren.

Bevorzugte Monomeren d13) sind Styrol, Acrylnitril, Methylmethacrylat, Glycidylacrylat und -methacrylat, Acrylamid und Methacrylamid.

Anstelle der Grundstufen-Monomere d11) bis d13) kann die Grundstufe d1) auch aus den Monomeren d11*) und d12*) aufgebaut sein.

Als Diene mit konjugierten Doppelbindungen, d11*), kommen Butadien, Isopren, Norbornen, und deren halogensubstituierte Derivate, etwa Chloropren, in Betracht. Bevorzugt sind Butadien und Isopren, insbesondere Butadien.

Als weitere monoethylenisch ungesättigte Monomere d12*) können die Monomere mitverwendet werden, wie sie für die Monomeren d13) bereits genannt wurden.

Bevorzugte Monomeren d12*) sind Styrol, Acrylnitril, Methylmethacrylat, Glycidylacrylat und -methacrylat, Acrylamid und Methacrylamid.

Der Pfropfkern d1) kann auch aus einer Mischung der Monomeren d11) bis d13), und d11*) bis d12*), aufgebaut sein.

Anstelle der Grundstufen-Monomere d11) bis d13) bzw. d11*) rund d12*) kann die Grundstufe d1) auch aus den Monomeren d11**) und d12**) aufgebaut sein. Als Dien in der Monomermischung d11**), welches in Mischung mit Ethylen und Propylen verwendet wird, sind insbesondere Ethylidennorbornen und Dicyclopentadien geeignet.

Als weitere monoethylenisch ungesättigte Monomere d12**) können die für d13) genannten Monomeren mitverwendet werden.

Der Pfropfkern kann auch aus einer Mischung der Monomeren d11) bis d13) und d11**) bis d12**), oder aus einer Mischung der Monomeren d11*) bis d12*) und d11**) bis d12**), oder aus einer Mischung der Monomeren d11) bis d13), d11*) bis d12*) und d11**) bis d12**), aufgebaut sein.

Enthält der Pfropfkern die Monomeren d11) bis d13), so entstehen nach Abmischung mit einer Hartphase aus Styrol und Acrylnitril (SAN), sogenannte ASA-Formmassen (Acrylnitril-Styrol-Acrylester). Enthält der Pfropfkern die Monomeren d11*) bis d12*), so entstehen nach Abmischung mit einer Hartphase aus Styrol und Acrylnitril (SAN) Formmassen vom ABS-Typ (Acrylnitril-Butadien-Styrol). Enthält der Pfropfkern die Monomeren d11**) bis d12**), so entstehen nach Abmischung mit einer Hartphase aus Styrol und Acrylnitril (SAN) Formmassen vom AES-Typ (Acrylnitril-EPDM-Styrol). In einer bevorzugten Ausführungsform handelt es sich demnach bei dem kautschukelastischen Polymerisat oder Elastomer D um ASA-Pfropfpolymerisate oder um ABS-Pfropfpolymerisate oder um AES-Pfropfpolymerisate, oder um Mischtypen aus ASA, ABS und AES-Pfropfpolymerisaten.

Monomere d21) sind insbesondere Styrolverbindungen der allgemeinen Formel 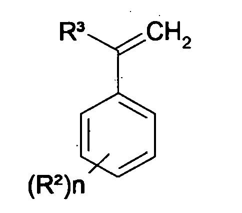 wobei R², R³ unabhängig voneinander H oder C1-C8-Alkyl ist und
n 0, 1, 2 oder 3 ist.

Vorzugsweise wird als Monomer d21) Styrol, α-Methylstyrol sowie außerdem mit C1-C8-Alkyl kernalkylierte Styrole wie p-Methylstyrol oder tert.-Butylstyrol eingesetzt. Styrol ist besonders bevorzugt. Es können auch Mischungen der genannten Styrole, insbesondere von Styrol und α-Methylstyrol, verwendet werden.

Anstelle der Styrolverbindungen oder in Mischung mit ihnen kommen C1- bis C8-Alkylester der Acrylsäure und/oder Methacrylsäure in Betracht, besonders solche, die sich vom Methanol, Ethanol, n- und iso-Propanol, sek.-, tert.- und iso-Butanol, Pentanol, Hexanol, Heptanol, Octanol, 2-Ethylhexanol und n-Butanol ableiten. Besonders bevorzugt ist Methylmethacrylat.

Monomer d23) ist ein monoethylenisch ungesättigtes Monomer. Beispielsweise als Monomer d23) geeignete Verbindungen sind:
- N-substituierte Maleinimide wie N-Methyl-, N-Phenyl- und N-Cyclohexylmaleinimid;
- Acrylsäure, Methacrylsäure, weiterhin Dicarbonsäuren wie Maleinsäure, Fumarsäure und Itaconsäure sowie deren Anhydride wie Maleinsäureanhydrid;
- Stickstoff-funktionelle Monomere wie Dimethylaminoethylacrylat, Diethylaminoethylaaylat, Vinylimidazol, Vinylpyrrolidon, Vinylcaprolactam, Vinylcarbazol, Vinylanilin, Acrylamid und Methacrylamid;
- aromatische und araliphatische Ester der Acrylsäure und Methacrylsäure wie Phenylacrylat, Phenylmethacrylat, Benzylacrylat, Benzylmethacrylat, 2-Phenylethylacrylat, 2-Phenylethylmethacrylat, 2-Phenoxyethylacrylat und 2-Phenoxyethylmethacrylat;
- ungesättigte Ether wie Vinylmethylether;
sowie Mischungen dieser Monomeren.

Demnach kann die Pfropfschale d2) auf Kosten der Monomere d21) weitere Monomere d22), oder d23), oder deren Mischungen, enthalten. Bevorzugt ist die Pfropfschale d2) aufgebaut aus Polymerisaten, ausgewählt aus der Gruppe bestehend aus Polystyrol, Copolymere aus Styrol und Acrylnitril, Copolymere aus α-Methylstyrol und Acrylnitril und Copolymere aus Styrol und Methylmethacrylat.

Die Herstellung der Pfropfstufe d2) kann unter den gleichen Bedingungen wie die Herstellung der Grundstufe d1) erfolgen, wobei man die Pfropfstufe d2) in einem oder mehreren Verfahrenschritten herstellen kann. Dabei können die Monomeren d21), d22) und d23) einzeln oder in Mischung miteinander zugefügt werden. Das Monomerenverhältnis der Mischung kann zeitlich konstant oder ein Gradient sein. Auch Kombinationen dieser Verfahrensweisen sind möglich.

Beispielsweise kann man zunächst Styrol alleine, und danach eine Mischung aus Styrol und Acrylnitril, auf die Grundstufe d1) polymerisieren.

Die Bruttozusammensetzung bleibt von den genannten Ausgestaltungen des Verfahrens unberührt.

Weiterhin eignen sich auch Pfropfpolymerisate mit mehreren "weichen" und "harten" Stufen, z. B. des Aufbaus d1)-d2)-d1)-d2) oder d2)-d1)-d2), vor allem im Falle größerer Teilchen.

Soweit bei der Pfropfung nicht gepfropfte Polymere aus den Monomeren d2) entstehen, werden diese Mengen, die in der Regel unter 10 Gew.-%. von d2) liegen, der Masse der Komponente D zugeordnet.

Die Herstellung der Pfropfpolymerisate D kann auf verschiedene Weise durchgeführt werden, insbesondere in Emulsion, in Mikroemulsion, in Miniemulsion, in Suspension, in Mikrosuspension, in Minisuspension, als Fällungspolymerisation, in Masse oder in Lösung, kontinuierlich oder diskontinuierlich.

Bei der Emulsionspolymerisation und ihren Varianten (Mikroemulsion, Miniemulsion) werden die Monomeren in Wasser emulgiert, wozu Emulgatoren mitverwendet werden. Die für die Stabilisierung der Emulsion geeigneten Emulgatoren sind seifenartige Hilfsstoffe, welche die Monomerentröpfchen umhüllen und auf diese Weise vor dem Zusammenlaufen schützen.

Als Emulgatoren eignen sich die dem Fachmann bekannten anionischen, kationischen und neutralen (nicht-ionogenen) Emulgatoren. Anionische Emulgatoren sind z. B. Alkalimetallsalze von höheren Fettsäuren mit 10 bis 30 C-Atomen wie Palmitin-, Stearin- und Ölsäure, Alkalimetallsalze von Sulfonsäuren mit z. B. 10 bis 16 C-Atomen, insbesondere Natriumsalze von Alkyl- oder Alkylarylsulfonsäuren, Alkalimetallsalze von Halbestern der Phthalsäure, und Alkalimetallsalze von Harzsäuren wie Abietinsäure: Kationische Emulgatoren sind z. B. Salze langkettiger, insbesondere ungesättigter Amine mit 12-18 C-Atomen, oder quaternäre Ammoniumverbindungen mit längerkettigen Olefin- oder Paraffinresten (also Salze quaternisierter Fettamine). Neutrale Emulgatoren sind z. B. ethoxylierte Fettalkohole, ethoxylierte Fettsäuren oder ethoxylierte Phenole und Fettsäureester von mehrwertigen Alkoholen wie Pentaerythrit oder Sorbit.

Für die Emulsionspolymerisation werden bevorzugt Initiatoren verwendet, die in dem Monomeren schlecht löslich, in Wasser dagegen gut löslich sind. Es werden daher bevorzugt Peroxosulfate wie Kalium-, Natrium- oder Ammoniumperoxodisulfat verwendet, oder auch Redox-Systeme, insbesondere solche auf Basis von Hydroperoxiden wie Cumolhydroperoxid, Dicumylperoxid, Benzoylperoxid oder Laurylperoxid.

Bei der Verwendung von Redöx-Systemen werden wasserlösliche Metallverbindungen mitverwendet, deren Metallkationen leicht die Oxidationsstufe wechseln können, z. B. Eisensulfathydrat.

Üblicherweise werden auch Komplexbildner wie Natriumpyrophosphat oder Ethylendiamintetraessigsäure mitverwendet, die ein Ausfallen schwerlöslicher Metallverbindungen bei der Polymerisation verhindern. Als Reduktionsmittel bei Redox-Systemen werden in der Regel organische Verbindungen wie Dextrose, Glucose und/oder Sulfoxylate verwendet.

Als weitere Zusatzstoffe können bei der Polymerisation Puffersubstanzen wie Na₂HPO₄/NaH₂PO₄ oder Na-citrat/Citronensäure verwendet werden, um einen im Wesentlichen konstant bleibenden pH-Wert einzustellen. Weiterhin können Molekulargewichtsregler, etwa Mercaptane wie t-Dodecylmercaptan, oder Ethylhexylthioglycolat mitverwendet werden. Diese weiteren Zusatzstoffe können, ebenso wie die Emulgatoren und Initiatoren bzw. Redox-Systeme, kontinuierlich oder diskontinuierlich am Anfang und/oder während der Herstellung der Emulsion und/oder während der Polymerisation, zugefügt werden.

Die genauen Polymerisationsbedingungen, insbesondere Art, Menge und Dosierung des Emulgators und der anderen Polymerisationshilfsstoffe werden bevorzugt so gewählt, dass der erhaltene Latex des Pfropfpolymerisates eine mittlere Teilchengröße, definiert durch den d50-Wert der Teilchengrößenverteilung, von 50 bis 1000, bevorzugt 100 bis 600 und besonders bevorzugt 150 bis 450 nm aufweist.

Die Teilchengrößenverteilung kann z. B. monomodal oder bimodal sein. Bevorzugt wird eine bimodale Teilchengrößenverteilung durch eine (teilweise) Agglomeration der Polymerteilchen erzielt. Dazu kann beispielsweise wie folgt vorgegangen werden: Man polymerisiert die Monomeren d1), welche den Kern aufbauen, bis zu einem Umsatz von üblicherweise mindestens 90, bevorzugt größer 95%, bezogen auf die eingesetzten Monomeren. Der erhaltene Kautschuklatex hat in der Regel eine mittlere Teilchengröße d50 von maximal 200 nm und eine enge Teilchengrößenverteilung (nahezu monodisperses System).

In der zweiten Stufe wird der Kautschuklatex agglomeriert. Dies geschieht in der Regel durch Zugabe einer Dispersion eines Acrylesterpolymerisates (siehe DE-A 24 27 960). Vorzugsweise werden Dispersionen von Copolymerisaten von (C1-C4-Alkyl)estern der Acrylsäure, vorzugsweise von Ethylacrylat, mit 0,1 bis 20 Gew.-% polare Polymerisate bildenden Monomeren, wie z. B. Acrylsäure, Methacrylsäure, Acrylamid oder Methacrylamid, N-Methylolmethacrylamid oder N-Vinylpyrrolidon, eingesetzt. Besonders bevorzugt ist ein Copolymerisat aus 96% Ethylacrylat und 4% Methacrylamid. Die Konzentration der Acrylesterpolymerisate in der zur Agglomeration verwendeten Dispersion soll im Allgemeinen zwischen 3 und 40, bevorzugt 5 bis 20 Gew.-% liegen.

Unter den genannten Bedingungen wird nur ein Teil der Kautschukteilchen agglomeriert, so dass eine bimodale Verteilung entsteht. Dabei liegen gemäß einer ersten Ausführungsform nach der Agglomeration im Allgemeinen mehr als 50, vorzugsweise zwischen 75 und 95% der Teilchen (Zahlen-Verteilung) im nicht agglomerierten Zustand vor.

Gemäß einer zweiten Ausführungsform wird die Agglomeration derart ausgeführt, dass nach der Agglomeration die Polymerteilchen eine polymodale Teilchengrößenverteilung aufweisen, in der in jedem Teilchengrößenintervall der Breite 50 nm weniger als 40 Gew.%, vorzugsweise weniger als 37,5 Gew.-%, bevorzugter weniger als 35 Gew.-%, besonders bevorzugt weniger als 32,5 Gew.%, insbesondere weniger als 30 Gew.-% der Teilchen vorliegen. Der mittlere Teilchendurchmesser bezieht sich dabei, sofern nicht anders angegeben, auf das Gewicht. Insbesondere handelt es sich um den d50-Wert der integralen Massenverteilung, die mit Hilfe einer Ultrazentrifuge bestimmt wird Die Teilchengrößenverteilung wird ebenfalls vorzugsweise mit Hilfe einer Ultrazentrifuge bestimmt, wie es weiter unten näher erläutert ist. Bei der Bestimmung der Teilchengrößenverteilung wird in der Regel das Integral über die Masse bzw. das Gewicht aufgetragen in Abhängigkeit der Teilchengröße. Wählt man sich nun ein beliebiges Intervall der Teilchengröße mit einer Breite von 50 nm, so beträgt nach dieser Ausführungsform der Gewichts- oder Massenzuwachs im Integral weniger als 40 Gew.%, vorzugsweise weniger als 37,5 Gew.-%, bevorzugter weniger als 35 Gew.%, besonders bevorzugt weniger als 32,5 Gew.-%, insbesondere weniger als 30 Gew.%. Üblicherweise liegen die Teilchengrößen in einem agglomerierten Latex im Bereich von bis zu 1.000 nm. In der Regel befindet sich daher das Intervall von 50 nm innerhalb dieses Teilchengrößenbereichs von bis zu 1.000 nm. Für ein beliebig positioniertes Teilchengrößenfenster der Breite 50 nm ist nach dieser zweiten Ausführungsform die vorstehende Bedingung zu erfüllen.

Vorzugsweise ist bei dieser Ausführungsform im teilchenförmigen Emulsionspolymerisat das Verhältnis D_{w}/Dₙ des Gewichtsmittels d50 zum Zahlenmittel d50 der Teilchengröße < 5, besonders bevorzugt < 4, insbesondere < 3. Vorzugsweise ist das Gewichtsintegral, aufgetragen gegen die Teilchengröße, eine monoton steigende Funktion. Dies bedeutet, dass im Verlauf der Funktion von 0 bis 100 Gew.-% kein Plateau vorliegt, sondern eine stetig ansteigende Kurve vorliegt.

Bei dieser zweiten Ausführungsform liegt die Teilchengröße des agglomerierenden Acrylesterpolymerisat-Latex vorzugsweise etwa im Bereich der Teilchengröße des zu agglomerierenden Latex. Das Verhältnis der mittleren Teilchengröße des Acrylesterlatex zur mittleren Teilchengröße des Substratlatex beträgt bei dieser zweiten Ausführungsform vorzugsweise 0,2 bis 2, besonders bevorzugt 0,5 bis 1,5.

Die Agglomeration wird bei dieser Ausführungsform vorzugsweise bei einer Temperatur von 20 bis 120°C, besonders bevorzugt 30 bis 100°C durchgeführt. Die Zugabe des Agglomerierlatex erfolgt vorzugsweise derart, dass pro Minute 1 bis 1/100 der Gesamtmenge des zuzufügenden Agglomerierlatex eingetragen werden. Die Agglomerierzeit beträgt vorzugsweise 1 Minute bis 2 Stunden, besonders bevorzugt 10 bis 60 Minuten.

Die Menge des Agglomeriertatex, bezogen auf den zu agglomerierenden Latex, beträgt bei dieser zweiten Ausführungsform vorzugsweise 0,1 bis 20, bevorzugt 0,5 bis 10, insbesondere 1 bis 5 Gew.%, bezogen auf Feststoffe.

Man nimmt die Emulsionspolymerisationsreaktion in der Regel unter langsamem oder mäßigem Rühren vor.

Die Mikroemulsionspolymerisation unterscheidet sich von der normalen Emulsionspolymerisation vor allem dadurch, dass aus den Monomeren, Wasser und den Emulgatoren eine Emulsion bereitet wird, indem man hohe Scherkräfte einwirken lässt. Dazu verwendet man Homogenisatoren, die dem Fachmann bekannt sind, z. B. Labordissolver Dispermat, Fa. VMA-Getzmann, Reichshof, DE, Ultra-Turax, Fa. Janke und Kunkel, Staufen, DE, Geräte mit einem Rotor-Stator-System, etwa Dispax, Fa. Janke und Kunkel, Staufen, DE. Üblicherweise betreibt man diese Geräte bei Drehzahlen von 1000 bis 25 000 min⁻¹, bevorzugt 2000 bis 25 000 min⁻¹.

Die Miniemulsionspolymerisation unterscheidet sich von der normalen Emulsionspolymerisation und der Mikroemulsionspolymerisation vor allem dadurch, dass die Partikelgröße in der Regel zwischen 30-500 nm beträgt (also zwischen den typischen Partikelgrößen der Emulsions- und der Mikroemulsionspolymerisation liegt), und die Partikel üblicherweise durch eine Kombination von ionischen Emulgatoren und Co-Emulgatoren gegen das Zusammenlaufen stabilisiert werden. Bei der Miniemulsion wird das Gemisch aus Monomeren, Wasser, Emulgatoren und Co-Emulgatoren hohen Scherkräften ausgesetzt, wodurch die Komponenten innig vermischt werden. Anschließend wird polymerisiert. Die hohen Scherkräfte können beispielsweise durch Ultraschall oder durch ein Microfluidizer-Gerät erzeugt werden. Als Co-Emulgatoren werden solche Verbindungen gewählt, die bewirken, dass die Tröpfchen, die vor dem Starten der Polymerisation gebildet werden, sehr klein aber nicht thermodynamisch stabil sind (siehe Gilbert, "Emulsion Polymerization, A Mechanistic Approach", Academic Press, London, San Diego 1995, S. 12-14). Als Co-Emulgatoren werden üblicherweise langkettige Alkane wie Hexadecan oder langkettige Alkohole wie Hexadecanol (Cetylalkohol) oder Dodecanol eingesetzt.

Bei der Suspensionspolymerisation und ihren Varianten (Mikrosuspension, Minisuspension) werden die Monomeren in Wasser suspendiert, wozu Schutzkolloide mitverwendet werden. Als Schutzkolloide eignen sich Cellulosederivate wie Carboxymethylcellulose und Hydroxymethylcellulose, Poly-N-Vinylpyrrolidon, Polyvinylalkohol und Polyethylenoxid, anionische Polymere wie Polyacrylsäure und deren Copolymere und kationische wie Poly-N-vinylimidazol. Die Menge dieser Schutzkolloide beträgt vorzugsweise 0,1 bis 5 Gew.%, bezogen auf die Gesamtmasse der Emulsion. Bevorzugt werden ein oder mehrere Polyvinylalkohole als Schutzkolloid verwendet, insbesondere solche mit einem Hydrolysegrad unter 96 mol%.

Man kann zusätzlich zu den Schutzkolloiden kolloidale Kieselsäure in Konzentration von in der Regel 0,2 bis 5 Gew.-%, bezogen auf die Menge der Dispersion, mitverwenden.

Für die Suspensionspolymerisation sind Initiatoren mit einer Halbwertzeit von einer Stunde, wenn die Temperatur bei 40 bis 150°C liegt, und die in den Monomeren merklich löslich, in Wasser dagegen schlecht löslich sind, bevorzugt. Es werden daher organische Peroxide, organische Hydroperoxide, Azoverbindungen und/oder Verbindungen mit C-C-Einfachbindungen als Initiatoren RI verwendet. Ebenso werden als radikalische Polymerisationsinitiatoren Monomere verwendet, die bei erhöhter Temperatur spontan polymerisieren. Es können auch Mischungen der genannten Initiatoren RI verwendet werden. Bei den Peroxiden sind diejenigen mit hydrophoben Eigenschaften bevorzugt. Ganz besonders bevorzugt sind Dilaurylperoxid und Dibenzoylperoxid. Als Azoverbindungen werden 2,2'-Azobis(2-methylbutyronitril) und 2,2'-Azobis(isobutyronitril) bevorzugt. Als Verbindungen mit labilen C-C-Bindungen verwendet man bevorzugt 3,4-Dimethyl-3,4-diphenylhexan und 2,3-Dimethyl-2,3-diphenylbutan.

Man nimmt die Polymerisationsreaktion in der Regel unter langsamem oder mäßigem Rühren vor.

Die Mikrosuspensionspolymerisation unterscheidet sich von der normalen Suspensionspolymerisation vor allem dadurch, dass durch Einwirkung hoher Scherkräfte eine feinteilige Suspension bereitet wird. Einzelheiten wurden bereits bei der Mikroemulsionspolymerisation beschrieben.

Die Minisuspensionspolymerisation unterscheidet sich von der normalen Suspensionspolymerisation und der Mikrosuspensionspolymerisation vor allem dadurch, dass die Partikelgrößen in der Regel zwischen denen der Suspensions- und der Mikrosuspensionspolymerisation liegen.

Bei der Fällungspolymerisation sind die eingesetzten Monomere in der kontinuierlichen Phase (z. B. Lösungsmittel oder Lösungsmittelgemisch) löslich, die entstehenden Polymere sind jedoch nicht oder nur begrenzt löslich und fallen daher während der Polymerisation aus. Auch Substanzpolymerisationen, bei denen das entstehende Polymer im Monomer unlöslich ist und daher ausfällt, sind möglich. Je nach Reaktionsmedium sind die bei der Emulsions- bzw. Suspensionspolymerisation beschriebenen Initiatoren möglich. Es kann auch thermisch initiiert werden.

Bei der Massepolymerisation werden die Monomeren ohne Zugabe eines Reaktionsmediums unter Verwendung der genannten monomerlöslichen Initiatoren polymerisiert, d. h. die Monomeren sind das Reaktionsmedium. Es kann auch thermisch initiiert werden.

Die Lösungspolymerisation unterscheidet sich von der Massepolymerisation vor allem dadurch, dass ein organisches Lösungsmittel wie Cyclohexan, Ethylbenzol oder Dimethylsulfoxid zur Verdünnung der Monomeren mitverwendet wird. Es können auch die genanten Initiatoren eingesetzt werden, oder es kann thermisch initiiert werden.

Das Verfahren zur Herstellung der Pfropfpolymerisate kann auch als kombiniertes Verfahren ausgeführt werden, bei dem mindestens zwei der zuvor beschriebenen Polymerisationsverfahren miteinander kombiniert werden. Hier sind insbesondere Masse/Lösung, Lösung/Fällung, Masse/Suspension und Masse/Emulsion zu nennen, wobei mit dem erstgenannten begonnen und mit dem letztgenannten beendet wird.

Die erfindungsgemäßen Formmassen können neben der Zusammensetzung I als weitere Komponente E Zusatzstoffe wie Verarbeitungshilfsmittel oder Mischungen unterschiedlicher Additive enthalten.

Der Anteil der Komponente E beträgt im allgemeinen bis zu 50 Gew.-%, beispielsweise 0,1 bis 50 Gew.%, vorzugsweise von 0,1 bis zu 40 Gew.%, insbesondere 0,5 bis 35 Gew.%, jeweils bezogen auf das Gewicht der in der Formmasse enthaltenen Zusammensetzung I.

Demgemäß betrifft die vorliegende Erfindung gemäß einer weiteren Ausführungsform Formmassen wie zuvor beschrieben, wobei die Formmasse als Komponente E 0,1 bis 50 Gew.%, bezogen auf das Gewicht der in der Formmasse enthaltenen Zusammensetzung I, weitere Zusätze enthält.

Weitere Zusatzstoffe im Sinne der vorliegenden Erfindung sind beispielsweise Stabilisatoren und Oxidationsverzögerer, Mittel gegen Wärmezersetzung und Zersetzung durch ultraviolettes Licht, Gleit- und Entformungsmittel, Farbstoffe und Pigmente und Weichmacher.

Pigmente und Farbstoffe sind allgemein in Mengen bis zu 6 Gew.%, bevorzugt von 0,5 bis 5 Gew.-% und insbesondere von 0,5 bis 3 Gew.-% enthalten.

Die Pigmente zur Einfärbung von Thermoplasten sind allgemein bekannt, siehe z. B. R. Gächter und H. Müller, Taschenbuch der Kunststoffadditive, Carl Hanser Verlag, 1983, S. 494 bis 510. Als erste bevorzugte Gruppe von Pigmenten sind Weißpigmente zu nennen wie Zinkoxid, Zinksulfid, Bleiweiß, Lithopone, Antimonweiss und Titandioxid. Von den beiden gebräuchlichsten Kristallmodifikationen (Rutil- und Anatas-Typ) des Titandioxids wird insbesondere die Rutilform zur Weißfärbung der erfindungsgemäßen Formmassen verwendet.

Schwarze Farbpigmente, die erfindungsgemäß eingesetzt werden können, sind Eisenoxidschwarz, Spinellschwarz, Manganschwarz (Mischung aus Mangandioxid, Siliciumdioxid und Eisenoxid), Kobaltschwarz und Antimonschwarz sowie besonders bevorzugt Ruß, der meist in Form von Furnace- oder Gasruß eingesetzt wird (siehe hierzu G. Benzing, Pigmente für Anstrichmittel, Expert-Verlag (1988), S. 78 ff).

Selbstverständlich können erfindungsgemäß zur Einstellung bestimmter Farbtöne anorganische Buntpigmente wie Chromoxidgrün oder organische Buntpigmente wie Azopigmente und Phthalocyanine eingesetzt werden. Derartige Pigmente sind allgemein im Handel üblich.

Oxidationsverzögerer und Wärmestabilisatoren, die den thermoplastischen Massen gemäß der Erfindung zugesetzt werden können, sind z. B. Halogenide von Metallen der Gruppe I des Periodensystems, z. B. Natrium-, Kalium-, Lithium-Halogenide. Weiterhin können Zinkfluorid und Zinkchlorid verwendet werden. Ferner sind sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, und Mischungen dieser Verbindungen, vorzugsweise in Konzentrationen bis zu 1 Gew.-%, bezogen auf das Gewicht der Zusammensetzung I, einsetzbar.

Beispiele für UV-Stabilisatoren sind verschiedene substituierte Resorcine, Salicylate, Benzotriazole und Benzophenone, die im Allgemeinen in Mengen bis zu 2 Gew.-% eingesetzt werden.

Gleit- und Entformungsmittel, die in der Regel in Mengen bis zu 1 Gew.-% der thermoplastischen Masse zugesetzt werden, sind Stearinsäure, Stearylalkohol, Stearinsäurealkylester und -amide sowie Ester des Pentaerythrits mit langkettigen Fettsäuren. Es können auch Salze des Calciums, Zinks oder Aluminiums der Stearinsäure sowie Dialkylketone, z. B. Distearylketon, eingesetzt werden. Erfindungsgemäß geeignet ist beispielsweise Calciumstearat.

Als weitere Zusatzstoffe kommen Nukleierungsmittel wie Talkum in Betracht.

Die Herstellung der erfindungsgemäßen Formmassen kann durch Mischen der Komponenten in an sich bekannter Weise erfolgen.

Die Komponenten werden, sofern sie keine Flüssigkeiten sind, vorteilhafterweise in fein gemahlener Form eingesetzt. Produkte mit einer durchschnittlichen Teilchengröße von kleiner als 100 µm, vorzugsweise von kleiner als 50 µm, sind besonders gut geeignet. Die Komponenten können gleichzeitig, zusammen oder nacheinander gemischt werden.

Die erfindungsgemäßen Formmassen können grundsätzlich nach an sich bekannten Verfahren, beispielsweise Extrusion, hergestellt werden. Die erfindungsgemäßen Formmassen können beispielsweise hergestellt werden, indem man die Ausgangskomponenten in üblichen Mischvorrichtungen wie Schneckenextrudern, vorzugsweise Zweischneckenextrudem, Brabender-Mischer oder Banburry-Mischer sowie Knetern mischt und anschließend extrudiert. Nach der Extrusion wird das Extrudat vorzugsweise abgekühlt und zerkleinert. Die Reihenfolge der Mischung der Komponenten kann variiert werden. So können zwei oder mehr Komponenten vorgemischt werden. Ebenso ist es aber im Rahmen der vorliegenden Erfindung möglich, dass alle Komponenten gemeinsam gemischt werden.

Um eine möglichst homogene Durchmischung zu erhalten, ist eine intensive Durchmischung vorteilhaft. Dazu sind im Allgemeinen mittlere Mischzeiten von 0,2 bis 30 Minuten bei Temperaturen von 200 bis 320 °C, bevorzugt 225 bis 310°C erforderlich. Nach der Extrusion kann das Extrudat abgekühlt werden und zerkleinert werden.

Vorteilhaft erfolgt die Mischung der Komponenten auf einem Extruder und vorzugsweise erfolgt die Vermengung in geschmolzener Form.

Demgemäß betrifft die vorliegende Erfindung auch ein Verfahren zur Herstellung einer wie oben beschriebenen Formmasse, umfassend das Vermischen von 40 bis 95 Gew.-% eines Copolymers enthaltend 55 bis 90 Gew.-% α-Methylstyrol und 10 bis 50 Gew.-% Acrylnitril sowie 0 bis 5 Gew.-% weitere Monomere als Komponente A, 2,5 bis 75 Gew.-% eines Polymers B, bestehend aus 60 bis 90 Gew.-% eines vinylaromatischen Monomers, 8,01 bis 39,8 Gew.-% Acrylnitril und 0,2 bis 1,99 Gew.-% Maleinsäureanhydrid, und 2,5 bis 60 Gew.-% Glasfasern als Komponente C.

Weiter betrifft die vorliegende Erfindung dieses Verfahren, weiter umfassend das Extrudieren einer Masse, enthaltend 40 bis 95 Gew.-% eines Copolymers enthaltend 55 bis 90 Gew.-% α-Methylstyrol und 10 bis 50 Gew.-% Acrylnitril sowie 0 bis 5 Gew.-% weitere Monomere als Komponente A, 2,5 bis 75 Gew.-% eines Polymers B, bestehend aus 60 bis 90 Gew.-% eines vinylaromatischen Monomers, 8,01 bis 39,8 Gew.-% Acrylnitril, 0,2 bis 1,99 Gew.-% Maleinsäureanhydrid, und 2,5 bis 60 Gew.-% Glasfasern als Komponente C, bei einer Temperatur im Bereich von 200 bis 320 °C.

Weiterhin betrifft die vorliegende Erfindung auch eine Formmasse, erhältlich durch die wie oben beschriebenen Verfahren.

Der Begriff "Formmasse", wie er im Rahmen der vorliegenden Erfindung verwendet wird, bezeichnet eine Masse gemäß einer oben genannten Zusammensetzungen, die durch mindestens einen geeigneten Schritt verformt werden kann. Aus den erfindungsgemäßen Formmassen lassen sich demgemäß durch Verformung Formkörper herstellen. Die Formmassen lassen sich auch in Folien, Filme und Schäume umwandeln. Deshalb weisen die Formmassen für eine derartige Verwendung vorteilhafte mechanische Eigenschaften auf.

Die Formmassen können durch einen formgebenden Schritt, beispielsweise durch Spritzgießen, Extrusion, Pressen, Pelletieren in Formkörper wie beispielsweise Granulate, Kugeln, Pellets, Tabletten geformt werden.

Demgemäß betrifft die vorliegende Erfindung auch ein wie oben beschriebenes Verfahren, zusätzlich umfassend Verarbeiten der Formmasse zu einem Formkörper.

Ebenso betrifft die vorliegende Erfindung gemäß einer weiteren Ausführungsform einen Formkörper, erhältlich durch ein wie oben beschriebenes Verfahren.

Aus den erfindungsgemäßen Formkörpern können weitere Formkörper hergestellt werden. Beispielsweise ist es möglich, ein erfindungsgemäßes Granulat zu schmelzen und, gegebenenfalls unter Zusatz mindestens eines geeigneten Zusatzstoffes, zu einem weiteren Formkörper zu verarbeiten. Als geeignete Zusatzstoffe sind beispielsweise die oben genannten Komponenten zu nennen.

Demgemäß betrifft die vorliegende Erfindung auch einen Formkörper, der mindestens 10 Gew.%, bevorzugt mindestens 20 Gew.-%, weiter bevorzugt mindestens 50 Gew.-% und insbesondere bevorzugt mindestens 90 Gew.-% wie beispielsweise 90, 91, 92, 93, 94, 95, 96, 97, 98, 99 oder 100 Gew.-% der erfindungsgemäßen Formmasse enthält.

Ein erfindungsgemäß besonders bevorzugter Formkörper ist ein Granulat, das zu 100 Gew.-% die erfindungsgemäße Formmasse enthält. Weiter bevorzugt weisen die Granulatteilchen eine Größe im Bereich von 1 bis 6 mm, weiter bevorzugt von 1,5 bis 5 mm und insbesondere bevorzugt von 2 bis 4 mm auf. Die Geometrie der Formkörper ist im Wesentlichen keinen Beschränkungen unterworfen und kann, je nach spezifischer Herstellung, beispielsweise zylindrisch, linsenförmig, kugelförmig oder auch anders ausgestaltet sein.

Die erfindungsgemäßen Formmassen und Formkörper zeichnen sich durch gute thermische Stabilität bei gleichzeitigen guten mechanischen Eigenschaften aus.

Weiter betrifft die vorliegende Erfindung die Verwendung einer wie oben beschriebene Formmasse zur Herstellung eines Formkörpers, wobei der Formkörper ein Spielzeug oder ein Teil eines Spielzeugs, ein Auto-, Flugzeug- oder Schiffzubehörteils oder ein Teil eines Auto-, Flugzeug- oder Schiffzubehörteils, eine Verpackung oder ein Teil einer Verpackung, ein Behälter oder ein Teil eines Behälters, ein Haushaltsgerät oder ein Teil eines Haushaltsgeräts, ein medizinisches Gerät oder ein Teil eines medizinischen Geräts, ein Bestandteil eines kosmetischen Artikels, ein Teil einer elektrischen oder elektronischen Vorrichtung oder eine beim Hausbau verwendete Vorrichtung oder ein Teil einer solchen ist.

Beispiele für spezifische Verwendungen sind beispielsweise Klipse, Befestigungselemente, Schnappverbindungen, Federelemente, Lautsprechergitter, Ventilkörper für WC-Spülkästen, Rollen, Hebel, Führungen für beispielsweise Kfz-Schiebedächer, Getriebekomponenten, Verstellantriebe, Kaffee-Brüheinheiten, Beregnungssysteme, Schalter, Kugelschalen für Gelenke, Pendelstützen für Kfz, Rückschlagventile, Scheibenwaschdüsen für Kfz, Kfz-Innenteile, Innenrohre für Bowdenzügen, Halterungen für Sonnenblenden für Kfz, Drucktasten, Aufwickelmechanismen für Sicherheitsgurte, Mahlwerke, Outsert-Chassis; Stuhlrückenlehnen, Gaszähler (Messkammergehäuse und Funktionsteile), Fenster- oder Türbeschläge, Computerteile, Druckerteile, Zierartikel.

Die folgenden Beispiele illustrieren die vorliegende Erfindung.

### Beispiele

### Messverfahren

### Molmassenbestimmung

Die Viskositätszahl der Copolymere wird nach DIN 53 727 an 0,5 gew.-%igen Lösungen in DMF ermittelt.

### Herstellung und Prüfung der Formmassen

Die Granulate wurden bei 260°C Massetemperatur und 60°C Werkzeugtemperatur verarbeitet.

Die Wärmeformbeständigkeit der Proben wurde mittels der Vicat-Erweichungstemperatur ermittelt. Die Vicat-Erweichungstemperatur wurde nach DIN 53 460 mit einer Kraft von 49,05 N und einer Temperatursteigerung von 50 K je Stunde an Normkleinstäben ermittelt.

Die Schlagzähigkeit der Produkte wurde an ISO-Stäben nach ISO 179 1eU bestimmt.

Die Fließfähigkeit wurde nach ISO 1133 bei 240°C und 5 kg Belastung bestimmt.

Die Steifigkeit der Materialien wird durch den im Zugversuch nach ISO 527 ermittelten E-Modul charakterisiert. In diesem Versuch wird auch die Reißdehnung ermittelt.

### Eingesetzte Komponenten

### Komponente A1

Copolymer aus 70 Gew.-% α-Methylstyrol und 30 Gew.-% Acrylnitril, charakterisiert durch eine Viskositätszahl von 66 ml/g (gemessen bei 25°C in 0,5 gew.-%iger DMF-Lösung)

### Komponente AV

Styrol-Acrylnitril-Copolymer mit 75 Gew.-% Styrol und 25 Gew.-% Acrylnitril und einer Viskositätszahl von 66 ml/g (gemessen bei 25°C in 0,5 gew.%iger DMF-Lösung)

### Komponente B1

S-AN-MA-Terpolymer (74/25/1 Gew.-%) mit einer VZ von 80 ml/g

### Komponente B2

S-AN-MA-Terpolymer (74/25/1 Gew.-%) mit einer VZ von 65 ml/g

### Komponente B3

S-AN-MA-Terpolymer (73,2/24,9/1,9 Gew.-%) mit einer VZ von 66 ml/g

### Komponente BV1

S-AN-MA-Terpolymer (70,6/23,7/5,7 Gew.-%) mit einer VZ von 80 ml/g

### Komponente C

Glasfasern mit einer Aminosilanschlichte, Faserdurchmesser 10 µm, Stapelfasern der Länge 4,5 mm

### Komponente D1

Pfropfkautschuk mit 70 Gew.-% Polybutadien im Kern und 30 Gew.-% einer Pfropfhülle aus 75 Gew.-% Styrol und 25 Gew.-% Acrylnitril. Mittlere Teilchengröße ca. 370 nm

### Komponente E1

Calciumstearat (Ceasit AV 40 der Fa. Bärlocher)

### Herstellung der Formmassen

Die Komponenten wurden in einem Zweiwellenextruder bei einer Massetemperatur von 240 bis 290°C gemischt. Die Schmelze wurde durch ein Wasserbad geleitet und granuliert.

Die Zusammensetzungen der Formmassen und die Ergebnisse der Messungen sind in Tabelle 1 aufgeführt.

**Tabelle 1**

| Formmasse | | V1 | 2 | 3 | V4 | V5 | 6 | 7 | V8 | 9 |
|---|---|---|---|---|---|---|---|---|---|---|
| Komponente [Gew.-%] | | | | | | | | | | |
| A1 | | 85 | 80 | 80 | - | 80 | 75 | 74,8 | - | 75 |
| AV | | - | - | - | 80 | - | - | - | 75 | - |
| B1 | | - | 5 | - | 5 | - | 5 | 5 | 5 | - |
| B2 | | - | - | 5 | - | - | - | - | - | - |
| B3 | | - | - | - | - | - | - | - | - | 5 |
| BV1 | | - | - | - . | - | 5 | - | - | - | |
| C | | 15 | 15 | 15 | 15 | 15 | 15 | 15 | 15 | 15 |
| D1 | | - | - | - | - | - | 5 | 5 | 5 | 5 |
| E1 | | - | - | - | - | - | - | 0,2 | - | - |
| | | | | | | | | | | |
| | | | | | | | | | | |

| Formmasse | | 1 | 2 | 3 | 4 | 5 | 6 | 7 | 8 | 9 |
|---|---|---|---|---|---|---|---|---|---|---|
| Vicat-Temp. [°C] | | 122 | 121 | 120 | 112 | 122 | 120 | 120 | 108 | 120 |
| MVI [ml/10'] | | 7,6 | 6,2 | 9,7 | 10,7 | 7,2 | 4,6 | 5,9 | 9,6 | 5,8 |
| an, RT [kJ/m²] | | 11,8 | 17,7 | 16,9 | 15,4 | 12,0 | 26,2 | 28,4 | 26,2 | 27,6 |
| E-Modul[MPa] | | 7075 | 6950 | 6940 | 6970 | 7005 | 6545 | 6450 | 6480 | 6480 |
| Reißdehn. [%] | | 1,6 | 1,8 | 1,7 | 1,7 | 1,5 | 2,5 | 2,6 | 2,4 | 2,6 |
| | | | | | | | | | | |

## Patentansprüche

1. Formmasse enthaltend 10 bis 100 Gew.-% einer Zusammensetzung I, bestehend aus
A) 40 bis 95 Gew.-%, bezogen auf das Gewicht der Zusammensetzung I, eines Copolymers enthaltend
55 bis 90 Gew.-%, bezogen auf das Gewicht der Komponente A, α-Methylstyrol,
10 bis 50 Gew.%, bezogen auf das Gewicht der Komponente A, Acrylnitril, sowie
0 bis 5 Gew.-%, bezogen auf das Gewicht der Komponente A, weitere Monomere
als Komponente A;
B) 2,5 bis 75 Gew.-%, bezogen auf das Gewicht der Zusammensetzung I, eines Polymers B, bestehend aus
60 bis 90 Gew.%, bezogen auf das Gewicht der Komponente B, eines vinylaromatischen Monomers,
8,01 bis 39,8 Gew.-%, bezogen auf das Gewicht der Komponente B, Acrylnitril,
0,2 bis 1,99 Gew.-%, bezogen auf das Gewicht der Komponente B, Maleinsäureanhydrid
als Komponente B; und
C) 2,5 bis 60 Gew.%, bezogen auf das Gewicht der Zusammensetzung I, Glasfasern als Komponente C,
wobei die Summe der Komponenten A, B und C 100 Gew.-% ergibt.

2. Formmasse nach Anspruch 1, wobei das Polymer B 0,2 bis 1,9 Gew.-%, bezogen auf das Gewicht der Komponente B, Maleinsäureanhydrid enthält.

3. Formmasse nach einem der vorherigen Ansprüche, wobei das Polymer B aus 70 bis 80 Gew.-% Styrol, 20 bis 30 Gew.-% Acrylnitril und 0,5 bis 1,5 Gew.-% Maleinsäureanhydrid, jeweils bezogen auf das Gewicht der Komponente B, besteht.

4. Formmasse nach einem der vorherigen Ansprüche, wobei die Formmasse als Komponente D 0,1 bis 50 Gew.-%, bezogen auf das Gewicht der in der Formmasse enthaltenen Zusammensetzung 1, eines kautschukelastischen Polymerisats oder Elastomers enthält.

5. Formmasse nach Anspruch 4, wobei das kautschukelastische Polymerisat oder Elastomer ein Pfropfkautschuk auf Basis von Butadien, Butadien/Styrol, EPDM oder Acrylaten ist.

6. Formmasse nach einem der vorherigen Ansprüche, wobei die Formmasse als Komponente E 0,1 bis 50 Gew.-%, bezogen auf das Gewicht der in der Formmasse enthaltenen Zusammensetzung I, weitere Zusätze enthält.

7. Verfahren zur Herstellung einer Formmasse, nach einem der Ansprüche 1 bis 7, umfassend das Vermischen von 40 bis 95 Gew.-% eines Copolymers enthaltend 55 bis 90 Gew.-% α-Methylstyrol und 10 bis 50 Gew.-% Acrylnitril sowie 0 bis 5 Gew.-% weitere Monomere als Komponente A, 2,5 bis 75 Gew.-% eines Polymers B, bestehend aus 60 bis 90 Gew.-% eines vinylaromatischen Monomers, 8,01 bis 39,8 Gew.-% Acrylnitril und 0,2 bis 1,99 Gew.-% Maleinsäureanhydrid, und 2,5 bis 60 Gew.-% Glasfasern als Komponente C.

8. Verfahren nach Anspruch 7, umfassend das Extrudieren einer Masse, enthaltend 40 bis 95 Gew.-% eines Copolymers enthaltend 55 bis 90 Gew.-% α-Methylstyrol und 10 bis 50 Gew.-% Acrylnitril sowie 0 bis 5 Gew.-% weitere Monomere als Komponente A, 2,5 bis 75 Gew.-% eines Polymers B, bestehend aus 60 bis 90 Gew.-% eines vinylaromatischen. Monomers, 8,01 bis 39,8 Gew.-% Acrylnitril; 0,2 bis 1,99 Gew.-% Maleinsäureanhydrid, und 2,5 bis 60 Gew.-% Glasfasern als Komponente C, bei einer Temperatur im Bereich von 200 bis 320 °C.

9. Verfahren nach einem der Ansprüche 7 und 8, zusätzlich umfassend das Verarbeiten der Formmasse zu einem Formkörper.

10. Formkörper, erhältlich durch ein Verfahren gemäß Anspruch 9.

11. Verwendung einer Formmasse gemäß einem der Ansprüche 1 bis 6 oder einer Formmasse erhältlich durch ein Verfahren gemäß Anspruch 7 oder 8 zur Herstellung eines Formkörpers, wobei der Formkörper ein Spielzeug oder ein Teil eines Spielzeugs, ein Auto-, Flugzeug- oder Schiffzubehörteils oder ein Teil eines Au to-, Flugzeug- oder Schiffzubehörteils, eine Verpackung oder ein Teil einer Verpackung, ein Behälter oder ein Teil eines Behälters, ein Haushaltsgerät oder ein Teil eines Haushaltsgeräts, ein medizinisches Gerät oder ein Teil eines medizinischen Geräts, ein Bestandteil eines kosmetischen Artikels, ein Teil einer elektrischen oder elektronischen Vorrichtung oder eine beim Hausbau verwendete Vorrichtung oder ein Teil einer solchen ist.

## Claims

1. A molding composition comprising from 10 to 100% by weight of a composition I, composed of
A) from 40 to 95% by weight, based on the weight of the composition I, of a copolymer comprising
from 55 to 90% by weight, based on the weight of component A, of α-methylstyrene,
from 10 to 50% by weight, based on the weight of component A, of acrylonitrile,
and also
from 0 to 5% by weight, based on the weight of component A, of other monomers
as component A;
B) from 2.5 to 75% by weight, based on the weight of the composition I, of a polymer B, composed of
from 60 to 90% by weight, based on the weight of component B, of a vinylaromatic monomer
from 8.01 to 39.8% by weight, based on the weight of component B, of acrylonitrile,
from 0.2 to 1.99% by weight, based on the weight of component B, of maleic anhydride
as component B; and
C) from 2.5 to 60% by weight, based on the weight of the composition I, of glass fibers as component C,
the entirety of components A, B and C giving 100% by weight.

2. The molding composition according to claim 1, where the polymer B comprises from 0.2 to 1.9% by weight, based on the weight of component B, of maleic anhydride.

3. The molding composition according to any of the preceding claims, where the polymer B is composed of from 70 to 80% by weight of styrene, from 20 to 30% by weight of acrylonitrile, and from 0.5 to 1.5% by weight of maleic anhydride, based in each case on the weight of component B.

4. The molding composition according to any of the preceding claims, where the molding composition comprises, as component D, from 0.1 to 50% by weight, based on the weight of the composition I present in the molding composition, of an elastomeric polymer or elastomer.

5. The molding composition according to claim 4, where the elastomeric polymer or elastomer is a graft rubber based on butadiene, on butadiene/styrene, on EPDM, or on acrylates.

6. The molding composition according to any of the preceding claims, where the molding composition comprises, as component E, from 0.1 to 50% by weight, based on the weight of the composition I present in the molding composition, of other additives.

7. A process for preparation of a molding composition according to any of claims 1 to 7, comprising the mixing of from 40 to 95% by weight of a copolymer comprising from 55 to 90% by weight of α-methylstyrene and from 10 to 50% by weight of acrylonitrile, and also from 0 to 5% by weight of other monomers as component A, from 2.5 to 75% by weight of a polymer B, composed of from 60 to 90% by weight of a vinylaromatic monomer, from 8.01 to 39.8% by weight of acrylonitrile, and from 0.2 to 1.99% by weight of maleic anhydride, and from 2.5 to 60% by weight of glass fibers as component C.

8. The process according to claim 7, comprising the extrusion of a material comprising from 40 to 95% by weight of a copolymer comprising from 55 to 90% by weight of α-methylstyrene and from 10 to 50% by weight of acrylonitrile, and also from 0 to 5% by weight of other monomers as component A, from 2.5 to 75% by weight of a polymer B, composed of from 60 to 90% by weight of a vinylaromatic monomer, from 8.01 to 39.8% by weight of acrylonitrile, from 0.2 to 1.99% by weight of maleic anhydride, and from 2.5 to 60% by weight of glass fibers as component C, at a temperature in the range from 200 to 320°C.

9. The process according to either of claims 7 and 8, additionally comprising the processing of the molding composition to give a molding.

10. A molding obtainable via a process according to claim 9.

11. The use of a molding composition according to any of claims 1 to 6 or of a molding composition obtainable via a process according to claim 7 or 8 for production of a molding, where the molding is a toy or a part of a toy, or is an automobile accessory, aircraft accessory, or ship accessory, or a part of an automobile accessory, of an aircraft accessory, or of a ship accessory, or is packaging or a part of packaging, or is a container or a part of a container, or is a household device or a part of a household device, or is a medical device or a part of a medical device, or is a constituent of a cosmetic item, or is a part of an electrical or electronic apparatus, or is an apparatus used in house construction or a part of such an apparatus.

## Revendications

1. Masse moulée contenant 10 à 100 % en poids d'une composition I constituée de :
A) 40 à 95 % en poids par rapport au poids de la composition I d'un copolymère contenant
55 à 90 % en poids par rapport au poids des composants A, d'α-méthylstyrène,
10 à 50 % en poids par rapport au poids des composants A, d'acrylonitrile, et
0 à 5 % en poids par rapport au poids des composants A, d'autres monomères
comme composants A ;
B) 2,5 à 75 % en poids par rapport au poids de la composition I d'un polymère B constitué de
60 à 90 % en poids par rapport au poids des composants B, d'un monomère vinylaromatique,
8,01 à 39,8 % en poids par rapport au poids des composants B, d'acrylonitrile,
0,2 à 1,99 % en poids par rapport au poids des composants B, d'anhydride d'acide maléique,
comme composants B ; et
C) 2,5 à 60 % en poids par rapport au poids de la composition I de fibres de verre comme composants C ;
la somme des composants A, B et C constituant 100 %.

2. Masse moulée selon la revendication 1, dans laquelle le polymère B contient 0,2 à 1,9 % en poids par rapport au poids des composants B d'anhydride d'acide maléique.

3. Masse moulée selon l'une quelconque des revendications précédentes, dans laquelle le polymère B est constitué de 70 à 80 % en poids de styrène, de 20 à 30 % en poids d'acrylonitrile et de 0,5 à 1,5 % en poids d'anhydride d'acide maléique, respectivement, par rapport au poids des composants B.

4. Masse moulée selon l'une quelconque des revendications précédentes, la masse moulée contenant comme composants D, 0,1 à 50 % en poids par rapport au poids de la composition I contenue dans la masse moulée, d'un polymère ou d'un élastomère à caoutchouc élastique.

5. Masse moulée selon la revendication 4, dans laquelle le polymère ou l'élastomère à caoutchouc élastique est un caoutchouc greffé à base de butadiène, de butadiène/styrène, d'EPDM ou d'acrylates.

6. Masse moulée selon l'une quelconque des revendications précédentes, dans laquelle la masse moulée contient comme composants E, 0,1 à 50 % en poids par rapport au poids de la composition I contenue dans la masse moulée, d'autres additifs.

7. Procédé de production d'une masse moulée selon l'une quelconque des revendications 1 à 7, comprenant le mélange de 40 à 95 % en poids d'un copolymère contenant 55 à 90 % en poids d'α-méthylstyrène et 10 à 50 % en poids d'acrylonitrile et 0 à 5 % en poids d'autres monomères comme composants A, 2,5 à 75 % en poids d'un polymère B constitué de 60 à 90% en poids d'un monomère vinylaromatique, 8,01 à 39,8 % en poids d'acrylonitrile et 0,2 à 1,99 % en poids d'anhydride d'acide maléique et 2,5 à 60 % en poids de fibres de verre comme composants C.

8. Procédé selon la revendication 7, comprenant l'extrusion d'une masse contenant 40 à 95 % en poids d'un copolymère contenant 55 à 90 % en poids d'α-méthylstyrène et 10 à 50 % en poids d'acrylonitrile et 0 à 5 % en poids d'autres monomères comme composants A, 2,5 à 75 % en poids d'un polymère B constitué de 60 à 90 % en poids d'un monomère vinylaromatique, 8,01 à 39,8 % en poids d'acrylonitrile et 0,2 à 1,99 % en poids d'anhydride d'acide maléique et 2,5 à 60 % en poids de fibres de verre comme composants C, à une température de l'ordre de 200 à 320°C.

9. Procédé selon l'une quelconque des revendications 7 et 8, comprenant en outre la transformation de la masse moulée en un corps moulé.

10. Corps moulé pouvant être obtenu par un procédé selon la revendication 9.

11. Utilisation d'une masse moulée selon l'une quelconque des revendications 1 à 6 ou d'une masse moulée pouvant être obtenue par un procédé selon la revendication 7 ou 8 pour fabriquer un corps moulé, le corps moulé étant un jouet ou une partie d'un jouet, une pièce détachée d'automobile, d'avion ou de bateau ou une partie d'une pièce détachée d'automobile, d'avion ou de bateau, un emballage ou une partie d'un emballage, un récipient ou une partie d'un récipient, un instrument domestique ou une partie d'un instrument domestique, un instrument médical ou une partie d'un instrument médical, un composant d'un article cosmétique, une partie d'un dispositif électrique ou électronique ou un dispositif utilisé dans la construction ou une pièce de ceux-ci.
